# EUROPEAN PATENT APPLICATION

(11) **EP 4 553 589 A1**
(43) Date of publication of application: **14.05.2025**
(21) Application number: 24211313.2
(22) Date of filing: 07.11.2024
(51) Int. Cl.: G05B 15/02

(54) **SYSTEMS AND METHODS FOR DETECTING OCCUPANCY OF ROOMS**

(30) Priority: 08.11.2023 US 202363596973 P
(71) Applicant: Carrier Corporation, Palm Beach Gardens, FL 33418 (US)
(72) Inventor: SMYTH, Michael, Charlotte, 28202 (US); HENDRICKS, Adam, Charlotte, 28202 (US); BAKER, Benjamen, Charlotte, 28202 (US); LYNN, Douglas, Charlotte, 28202 (US); FINCH, Michael, Charlotte, 28202 (US)
(74) Representative: Haseltine Lake Kempner LLP

(57) **Abstract**

Systems and methods for detecting an occupancy of a room. The method comprises receiving, from a first door sensor associated with a door of the room, sensor readings indicative of an opening operation of the door. The method comprises determining, based on the sensor readings of the first door sensor, the occupancy status of the room to be a positive status. The method comprises receiving, from a second door sensor, sensor readings indicative of a closing and/or locking operation of the door. The method comprises determining whether the closing and/or locking operation has been performed. The method comprises upon determining that the closing and/or locking operation has been performed, validating the occupancy status of the room to be the positive status; and upon determining that the closing and/or locking operation has not been performed, triggering a supplemental detection process to detect the occupancy of the room.

## Description

### CROSS REFERENCE TO RELATED APPLICATIONS

The present application claims the benefit of and priority to US Provisional Patent Application No. 63/596,973, filed November 8, 2023, and titled SYSTEMS AND METHODS FOR DETECTING OCCUPANCY OF ROOMS, the disclosure of which is incorporated herein by reference.

### FIELD OF THE INVENTION

The disclosure generally relates to detection systems, and more particularly relates to systems and methods for detecting occupancy of rooms.

### BACKGROUND

Occupancy detection methods are increasingly being used in private homes and establishments offering accommodation to customers. Occupants may spend some time within a room and then may leave the room such that the room remains unoccupied thereafter. When a room is unoccupied, the facilities within the room, such as lights and heating, cooling, and air-conditioning (HVAC) units, may continue to operate leading to energy consumption. In such scenarios, occupancy detection can help to determine whether the room is occupied or unoccupied. If the room is unoccupied, facilities to the room can be turned off, reducing energy consumption.

Conventional techniques to detect the presence of occupants within the rooms include motion sensors. However, motion sensors do not cover every area of the room leading to blind spots that may result in incorrect classification of the room as unoccupied. Moreover, motion sensors are not useful in scenarios where the occupants are sleeping or sitting still. Thus, detection using motion sensors can result in a high false negative rate, i.e., room detected as unoccupied when room is occupied.

In other conventional techniques, single sensor-based systems, proximity sensors, and the like may be utilized, however, such techniques lead to unbalanced detection. As an example, detection based on proximity sensors results in a high false positive rate, i.e., room detected as occupied when the room is not occupied. With proximity sensors, field of view and distance is limited. Further, single sensor-based systems are not resilient as a failure of the sensor results in a failure of the entire detection system.

In sensor-based techniques, data from the sensor(s) may be processed to determine the occupancy within the room. The processing may be based on certain algorithms or mathematical models. Continuously engaging algorithms and models to determine occupancy may result in increased processing time and cost. Further, in case algorithms and models are remote, then network bandwidth would also be required to detect occupancy. This delays the detection results and increases costs.

Therefore, it would be advantageous to provide a solution that can overcome the above-discussed problems.

### SUMMARY

This summary is provided to introduce a selection of concepts, in a simplified format, that are further described in the detailed description of the disclosure. This summary is neither intended to identify key or essential inventive concepts of the disclosure and nor is it intended for determining the scope of the disclosure.

Disclosed herein is a system for detecting an occupancy of a room, the system comprising a first door sensor and a second door sensor associated with a door of the room. The first door sensor being configured to detect an opening operation of the door and the second door sensor being configured to detect a closing and/or locking operation of the door. The system comprises a control unit communicatively connected with the first door sensor and the second door sensor. The control unit comprises one or more processors configured to receive, from the first door sensor, sensor readings indicative of the opening operation of the door. The one or more processors are configured to determine, based on the sensor readings of the first door sensor, the occupancy status of the room to be a positive status. The one or more processors are configured to receive, from the second door sensor, sensor readings indicative of the closing and/or locking operation of the door. The one or more processors are configured to determine, based on the sensor readings of the second door sensor, whether the closing and/or locking operation has been performed. The one or more processors are configured to, upon determining that the closing and/or locking operation has been performed, validate the occupancy status of the room to be the positive status. The one or more processors are configured to, upon determining that the closing and/or locking operation has not been performed, trigger a supplemental detection process to detect the occupancy of the room.

In one or more embodiments, the system comprises a plurality of sensors being configured to measure corresponding occupancy parameters. To trigger the supplemental detection process, the one or more processors are configured to receive, from the plurality of sensors, sensor readings indicative of the corresponding occupancy parameters, wherein each of the received sensor readings includes a sequence of measurements, over a predetermined time duration, of the corresponding occupancy parameters. Further, the one or more processors are configured to determine, based on the received sensor readings, one or more of the occupancy status of the room, and a confidence value associated with the determined occupancy status. The occupancy status is indicative of one of the positive status indicating occupancy of the room and the negative status indicating non-occupancy of the room.

In one or more embodiments, the one or more processors are further configured to, in response to determining the occupancy status, trigger a control action associated with the room based on the determined occupancy status. To trigger the control action associated with the room, the one or more processors are configured to control an operation of one or more devices associated with the room. The one or more devices comprise a heating, ventilation, and air-conditioning (HVAC) system, a thermostat, and lighting units.

In one or more embodiments, to determine one or more of the occupancy status and the confidence value, the one or more processors are configured to select a mathematical model from a plurality of mathematical models based on a type of the plurality of sensors and the corresponding occupancy parameters. Further, the one or more processors are configured to determine the one or more of the occupancy status and the confidence value based on the selected mathematical model. Further, the one or more processors are configured to determine, based on the selected mathematical model and the sequence of measurements, a first classification probability value and a second classification probability value associated with the occupancy status of the room. Further, the one or more processors are configured to compare the first classification probability value and the second classification probability value. Further, the one or more processors are configured to, in response to a determination that the first classification probability value is greater than the second classification probability value, determine the occupancy status to be the positive status indicating occupancy of the room. Further, the one or more processors are configured to, in response to a determination that the second classification probability value is greater than the first classification probability value, determine the occupancy status to be the negative status indicating non-occupancy of the room.

In one or more embodiments, the one or more processors are configured to cause information related to the occupancy status to be displayed on one or more of a user interface disposed within the room and a user interface associated with a handheld device of a user.

In one or more embodiments, the opening operation of the door includes opening of the door from the outside of the room, and the closing and/or locking operation of the door comprises one of closing or locking of the door from the inside of the room.

Disclosed herein is a method for detecting an occupancy of a room. The method comprises receiving, from a first door sensor associated with a door of the room, sensor readings indicative of an opening operation of the door, the first door sensor being configured to detect the opening operation of the door. Further, the method comprises determining, based on the sensor readings of the first door sensor, the occupancy status of the room to be a positive status. Further, the method comprises receiving, from a second door sensor associated with the door of the room, sensor readings indicative of a closing and/or locking operation of the door, the second door sensor being configured to detect the closing and/or locking operation of the door. Further, the method comprises determining, based on the sensor readings of the second door sensor, whether the closing and/or locking operation has been performed. Further, the method comprises, upon determining that the closing and/or locking operation has been performed, validating the occupancy status of the room to be the positive status. Further, the method comprises, upon determining that the closing and/or locking operation has not been performed, triggering a supplemental detection process to detect the occupancy of the room.

In one or more embodiments, triggering the supplemental detection process comprises receiving, from a plurality of sensors configured to measure corresponding occupancy parameters, sensor readings indicative of the corresponding occupancy parameters, wherein each of the received sensor readings includes a sequence of measurements, over a predetermined time duration, of the corresponding occupancy parameters. Further, the method comprises determining, based on the received sensor readings, one or more of the occupancy status of the room, and a confidence value associated with the determined occupancy status, wherein the occupancy status is indicative of one of the positive status indicating occupancy of the room and the negative status indicating non-occupancy of the room.

In one or more embodiments, the method comprises, in response to determining the occupancy status, triggering a control action associated with the room based on the determined occupancy status, wherein triggering the control action comprises control an operation of one or more devices associated with the room, wherein the one or more devices comprise a heating, ventilation, and air-conditioning (HVAC) system, a thermostat, and lighting units.

In one or more embodiments, determining the occupancy status and the confidence value comprises selecting a mathematical model from a plurality of mathematical models based on a type of the plurality of sensors and the corresponding occupancy parameters. Further, the method comprises determining the one or more of the occupancy status and the confidence value based on the selected mathematical model. Further, the method comprises determining, based on the selected mathematical model and the sequence of measurements, a first classification probability value and a second classification probability value associated with the occupancy status of the room. Further, the method comprises comparing the first classification probability value and the second classification probability value. Further, the method comprises, in response to a determination that the first classification probability value is greater than the second classification probability value, determining the occupancy status to be the positive status indicating occupancy of the room. Further, the method comprises, in response to a determination that the second classification probability value is greater than the first classification probability value, determining the occupancy status to be the negative status indicating non-occupancy of the room.

In one or more embodiments, the method comprises comprising causing information related to the occupancy status to be displayed on one or more of a user interface disposed within the room and a user interface associated with a handheld device of a user.

In one or more embodiments, the opening operation of the door includes opening of the door from the outside of the room, and the closing and/or locking operation of the door comprises one of closing or locking of the door from the inside of the room.

Also disclosed here is a system for detecting an occupancy of a room. The system comprises a CO2 sensor and a noise sensor located within the room, each of the CO2 sensor and the noise sensor being configured to measure corresponding occupancy parameters. The system comprises a control unit communicatively connected with the CO2 sensor and the noise sensor, the control unit comprising one or more processors configured to receive, from the CO2 sensor and the noise sensor, sensor readings indicative of the corresponding occupancy parameters. Further, the one or more processors are configured to determine, based on the received sensor readings, an occupancy status of the room to be one of a positive status indicating occupancy of the room and a negative status indicating non-occupancy of the room. Further, the one or more processors are configured to, in response to determining the occupancy status, trigger a control action associated with the room based on the determined occupancy status.

In one or more embodiments, each of the received sensor readings includes a sequence of measurements, over a predetermined time duration, of the corresponding occupancy parameters. The occupancy parameter measured by the CO2 sensor includes a CO2 level within the room. The occupancy parameter measured by the noise sensor includes sound frequencies within the room.

In one or more embodiments, to determine the occupancy status, the one or more processors are configured to determine one of a CO2 level or a rate of change of CO2 level within the room based on the sensor readings received from the CO2 sensor. Further, the one or more processors are configured to determine sound frequencies within the room based on the sensor readings received from the noise sensor. Further, the one or more processors are configured to determine the occupancy status based on one or more trained mathematical model, the determined sound frequencies, and the determined one of the CO2 level or the rate of change of CO2 level.

In one or more embodiments, to trigger the control action associated with the room, the one or more processors are configured to control an operation of one or more devices associated with the room, wherein the one or more devices comprise a heating, ventilation, and air-conditioning (HVAC) system, a thermostat, and lighting units.

In one or more embodiments, to trigger the control action associated with the room, the one or more processors are configured to cause information related to the occupancy status to be displayed on one or more of a user interface disposed within the room and a user interface associated with a handheld device of a user.

Also disclosed herein is a method for detecting an occupancy of a room. The method comprises receiving, from a CO2 sensor and a noise sensor located within the room, sensor readings indicative of corresponding occupancy parameters, wherein each of the CO2 sensor and the noise sensor are configured to measure corresponding occupancy parameters. Further, the method comprises determining, based on the received sensor readings, an occupancy status of the room to be one of a positive status indicating occupancy of the room and a negative status indicating non-occupancy of the room. Further, the method comprises, in response to determining the occupancy status, triggering a control action associated with the room based on the determined occupancy status.

In one or more embodiments, each of the received sensor readings includes a sequence of measurements, over a predetermined time duration, of the corresponding occupancy parameters. The occupancy parameter measured by the CO2 sensor includes a CO2 level within the room. The occupancy parameter measured by the noise sensor includes sound frequencies within the room.

In one or more embodiments, determining the occupancy status comprises determining one of a CO2 level or a rate of change of CO2 level within the room based on the sensor readings received from the CO2 sensor. Further, the method comprises determining sound frequencies within the room based on the sensor readings received from the noise sensor. Further, the method comprises determining the occupancy status based on one or more trained mathematical model, the determined sound frequencies, and the determined one of the CO2 level or the rate of change of CO2 level.

In one or more embodiments, triggering the control action associated with the room comprises controlling an operation of one or more devices associated with the room, wherein the one or more devices comprise a heating, ventilation, and air-conditioning (HVAC) system, a thermostat, and lighting units.

In one or more embodiments, triggering the control action associated with the room comprises causing information related to the occupancy status to be displayed on one or more of a user interface disposed within the room and a user interface associated with a handheld device of a user.

To further clarify the advantages and features of the methods, systems, and apparatuses, a more particular description of the methods, systems, and apparatuses will be rendered by reference to specific embodiments thereof, which are illustrated in the appended drawings. It is appreciated that these drawings depict only typical embodiments of the disclosure and are therefore not to be considered limiting of its scope. The disclosure will be described and explained with additional specificity and detail with the accompanying drawings.

### BRIEF DESCRIPTION OF THE DRAWINGS

These and other features, aspects, and advantages of the disclosure will become better understood when the following detailed description is read with reference to the accompanying drawings in which like characters represent like parts throughout the drawings, wherein:
**Figure 1** illustrates a system environment for detecting occupancy of rooms, in accordance with one or more embodiments of the disclosure;
**Figure 2** illustrates a schematic block diagram of the system for detecting occupancy of rooms, in accordance with one or more embodiments of the disclosure;
**Figure 3** illustrates another system environment for detecting occupancy of rooms, in accordance with one or more embodiments of the disclosure;
**Figures 4A-4B** illustrates graphical representations of the sensor readings from CO2 sensor and noise sensor, respectively, in accordance with one or more embodiments of the disclosure;
**Figure 5** illustrates an operational process flow for detecting occupancy of rooms, in accordance with one or more embodiments of the disclosure; and
**Figures 6-7** illustrate process flow charts depicting methods for detecting occupancy of rooms, in accordance with one or more embodiments of the disclosure.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment", "some embodiments", "one or more embodiments" and similar language throughout this specification may but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

In addition to overcoming the challenges related to detecting presence of occupants in a room, the disclosure provides for a system that allows for accurate occupancy detection in an efficient manner. Further, energy and cost savings related to appliances such as HVAC systems and lighting units in rooms can be achieved. Staff efficiency can also be improved based on accurate detection of the presence of occupants in the rooms.

Embodiments of the disclosure will be described below in detail with reference to the accompanying drawings.

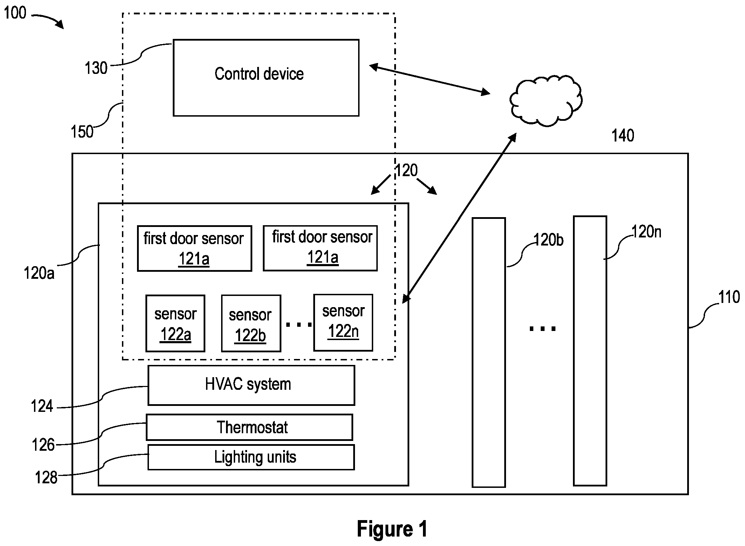

**Figure 1** illustrates a system environment 100 for detecting occupancy of rooms. The system environment 100 may include an indoor area/environment 110 comprising a plurality of rooms 120a-120n (interchangeably referred to as "120" hereinafter). In an embodiment, the indoor area 110 may be associated with an establishment providing accommodation to users, such as, but not limited to, a hotel, a lodge, a guest house, and the like. The plurality of rooms 120a-120n may include rooms that have been allotted to users as well as rooms that are available for allotment to users looking for accommodation. In another embodiment, the indoor area 110 may be associated with private houses and the like, and the plurality of rooms 120a-120n may include various kinds of rooms such as bedrooms, guestrooms, living rooms, and the like.

Each room 120 may be associated with a first door sensor 121a and a second door sensor 121b. The first door sensor 121a and the second door sensor 121b may be positioned adjacent or integrated within the corresponding door of the room 120. In some embodiments, the first door sensor 121a and the second door sensor 121b may be integrated into a single sensing device. The first door sensor 121a may be configured to detect whether the corresponding door has been opened from the outside of the room 120, such as, when an occupant has opened the door to enter into the room 120. The first door sensor 121a may thus be configured to detect an opening operation of the door from the outside of the room 120. The opening operation of the door may include, for example, opening of the door by a key, by a smart card, and the like.

The second door sensor 121b may be configured to detect whether the corresponding door has been operated from the inside of the room 120, such as, when an occupant has closed or locked the door from the inside of the room 120. For example, the occupant may enter the room 120 and lock the door by means of a deadbolt and/or other locking mechanism(s). The second door sensor 121b may thus be configured to detect a closing and/or locking operation of the door from the inside of the room 120.

Further, the room 120 may be associated with a plurality of environmental sensors 122a-122n (referred to as "the plurality of sensors 122a-122n" hereinafter). The plurality of sensors 122a-122n may be located within the room 120. The plurality of sensors 122a-122n may be configured to measure corresponding occupancy parameters associated with the room 120. In some embodiments, each of the plurality of sensors 122a-122n may be configured to measure the corresponding occupancy parameter, the corresponding occupancy parameter being indicative of occupancy of the room 120. In particular, based on the corresponding occupancy parameters sensed by the plurality of sensors, the occupancy of the room 120 may be determined, as will be detailed further below. A person skilled in the art would understand that the details explained with respect to one room 120 may be equally applicable for each of the plurality of rooms 120a-120n, without deviating from the scope of the disclosure.

In some embodiments, the corresponding occupancy parameters include multiple parameters such as, but not limited to, motion, temperature, humidity, pressure, proximity, noise, particulate matter (PM) 2.5 (for particulate matter of 2.5 micron diameter or less), PM 10 (for particulate matter of 10 micron diameter or less), volatile organic compounds (VOCs), carbon dioxide (CO2), light intensity, lock operation, and plug power consumption. The plurality of sensors 122a-122n may include sensors configured to sense one or more of the multiple occupancy parameters and generate sensor readings indicative of the sensed occupancy parameters.

In some embodiments, the plurality of sensors 122a-122n may include a passive infrared (PIR) sensor for detecting the motion of any occupants in the room 120. In some embodiments, the plurality of sensors 122a-122n may include temperature sensors, humidity sensors, and pressure sensors to measure temperature, humidity, and pressure respectively within the room 120. In some embodiments, the plurality of sensors 122a-122n may include a proximity sensor for sensing proximity of any occupants with respect to the proximity sensor. In some embodiments, the plurality of sensors 122a-122n may include an indoor air quality (IAQ) sensor for measuring multiple parameters such as, but not limited to, PM 2.5, PM 10, VOCs, and CO2. In some embodiments, the plurality of sensors 122a-122n may include a noise sensor and a light sensor for measuring an amount of noise and an amount of light intensity, respectively, within the room 120. In some embodiments, the plurality of sensors 122a-122n may include a current transformer (CT) sensor for measuring power plug consumption. In some embodiments, the plurality of sensors 122a-122n may include motion sensors and/or radio-frequency identification (RFID) tags to detect lock (and unlock) operation of doors associated with the room 120.

In some embodiments, one or more of the plurality of sensors 122a-122n may be sensors disposed independently at respective locations within the room 120. In some embodiments, one or more of the plurality of sensors 122a-122n may be integrated with detection units disposed within the room 120. In some embodiments, the temperature sensor, the humidity sensor, and the proximity sensor may be integrated with a thermostat disposed within the room 120. In some embodiments, the temperature sensor, the humidity sensor, the PIR sensor, the noise sensor, and the IAQ sensor may be integrated with a smoke detector disposed within the room 120. In some embodiments, the IAQ sensor may be integrated with an IAQ monitoring unit disposed within the room 120.

In some embodiments, each room 120 of the plurality of rooms 120a-120n may be associated with a heating, ventilation, and air conditioning (HVAC) system 124, a thermostat 126, and lighting units 128. The HVAC system 124 may be configured for facilitating circulation of fresh air in the room, and further, facilitate heating and cooling of the room 120. The thermostat 126 may be configured to provide instructions to the HVAC system 124 with respect to heating and cooling set points desired in the room 120. The lighting units 128 may include various electrical components such as power outlets, lights, lamps, and other electric devices within the room 120.

The system environment further comprises a control device 130 communicatively coupled to the first door sensor 121a, the second door sensor 121b, and the plurality of sensors 122a-122n over a communication network 140, as discussed below herein throughout the disclosure. In some embodiments, the HVAC system 124, the thermostat 126, and the lighting units 128 may be communicatively coupled to the control device 130 over the communication network 140. The control device 130 may be configured to detect the operation of the door of the room 120 based on readings from the first door sensor 121a and the second door sensor 121b. The control device 130 may further be configured to detect occupancy of the room 120 based on the occupancy parameters sensed by the plurality of sensors 122a-122n associated with the room 120. The control device 130, the first door sensor 121a, the second door sensor 121b, and the plurality of sensors 122a-122n may form a system 150 for detecting occupancy of the room 120. In some embodiments, the functionalities of the system 150 comprising the control device 130, the first door sensor 121a, the second door sensor 121b, and the plurality of sensors 122a-122n may be provided by means of a single device.

In some embodiments, the control device 130 may be a server-based device that is remote to the indoor area 110. In some embodiments, the control device 130 may be a cloud-based device. In some embodiments, the control device 130 may be provided within the indoor area 110. For instance, the control device 130 may be integrated with the thermostat 126 and the functionalities of the control device 130 may be provided through the thermostat 126, and thus, the thermostat 126 may form part of the system 150 in such embodiments. In some embodiments, one or more components of the control device 130 may be provided on cloud while one or more components of the control device 130 may be provided on a server.

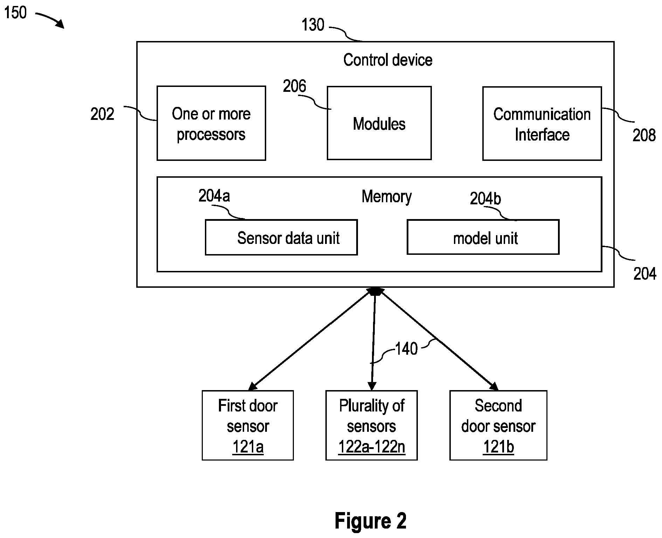

**Figure 2** illustrates a schematic block diagram of the system 150 for detecting occupancy of the plurality of rooms 120a-120n in the indoor area 110.

As shown in Figure 2, the system 150 comprises at least the control device 130, the first door sensor 121a, the second door sensor 121b, and the plurality of sensors 122a-122n associated with the room 120. It is appreciated that the control device 130 may be in communication with the first door sensor 121a, the second door sensor 121b, and plurality of sensors 122a-122n associated with all rooms of the plurality of rooms 120a-120n, and the details provided with respect to the first door sensor 121a, the second door sensor 121b, and the plurality of sensors 122a-122n for the room 120 is equally applicable for the first door sensor 121a, the second door sensor 121b, and the plurality of sensors 122a-122n for the other rooms.

In one or more embodiments, the control device 130 may comprise one or more processors 202, a memory 204, one or more modules 206, and a communication interface 208.

The one or more processors 202 may be configured to communicate with the memory 204 to store sensor readings generated by the first door sensor 121a, the second door sensor 121b, and the plurality of sensors 122a-122n. In some embodiments, the memory 204 may comprise sensor data unit 204a for storing the sensor readings generated by the first door sensor 121a, the second door sensor 121b, and the plurality of sensors 122a-122n. The sensor readings may include real-time sensor readings as well as historic sensor readings. In one or more embodiments, the one or more processors 202 may be one or more microprocessor(s) or microcontroller(s). The one or more processors 202 may include one or a plurality of processors, may include one or more general-purpose processors, such as a central processing unit (CPU), an application processor (AP), or the like, a graphics-only processing unit such as a graphics processing unit (GPU), a visual processing unit (VPU), and/or an Artificial intelligence (AI) dedicated processor such as a neural processing unit (NPU).

In some embodiments, the memory 204 may store data and instructions executable by the processor(s) 202 to perform the method steps for detecting occupancy of the room 120, as discussed herein throughout the disclosure. The memory 204 may further include, but is not limited to, a non-transitory computer-readable storage media such as various types of volatile and non-volatile storage media, including but not limited to, random access memory, read-only memory, programmable read-only memory, electrically programmable read-only memory, electrically erasable read-only memory, flash memory, magnetic tape or disk, optical media and the like. Further, the non-transitory computer-readable storage media of memory 204 may include executable instructions in a form of the modules 206 and a database to store data. The modules 206 may include a set of instructions that may be executed to cause the one or more processors 202 to perform any one or more of the methods for detecting occupancy of the plurality of rooms 120a-120n based on sensor readings, as disclosed herein throughout the disclosure. Specifically, the one or more modules 206 may be configured to perform the steps of the disclosure using the data stored in the database of the memory 204 for detecting occupancy of the plurality of rooms 120a-120n based on the sensor readings. In another embodiment, the modules 206 may be one or more hardware units that may be outside the memory 204. In one embodiment, the memory 204 may communicate via a bus within the processor(s) 202.

In one or more embodiments, the communication interface 208 may include a transmitter and a receiver configured to communicate with the first door sensor 121a, the second door sensor 121b, and the plurality of sensors 122a-122n, via the communication network 140. In some embodiments, the communication interface 208 may be configured to communicate with one or more of the HVAC system 124, the thermostat 126, and the lighting units 128, via the communication network 140. The communication via the communication network 140 may be based on a wireless communication protocol. The communication interface 208 may be configured for communicating internally between internal hardware components and with external devices, e.g., the first door sensor 121a, the second door sensor 121b, and the plurality of sensors 122a-122n, via one or more networks (e.g., radio technology). The communication interface 208 may include an electronic circuit specific to a standard that may enable wireless communication.

Referring to Figures 1 and 2, the one or more processors 202 may be configured to receive sensor readings from the first door sensor 121a associated with the room 120. The sensor readings may be indicative of an opening operation of the room 120. The one or more processors 202 may be configured to determine, based on the received sensor readings from the first door sensor 121a, an occupancy status of the room 120. In particular, the one or more processors 202 may be configured to determine the occupancy status of the room 120 to be occupied upon the first door sensor 121a detecting operation of the door from the outside of the room 120. The operation of the door may include opening of the door by means of a key or a card.

The one or more processors 202 may be configured to receive sensor readings from the second door sensor 121b associated with the room 120. The sensor readings may be indicative of a closing and/or locking operation of the door. The one or more processors 202 may be configured to validate, based on the received sensor readings from the second door sensor 121b, the occupancy status of the room 120. In particular, the one or more processors 202 may be configured to validate the occupancy status of the room 120 to be occupied upon the second door sensor 121b detecting operation of the door from the inside of the room 120. The operation of the door from the inside of the room 120 may include closing and/or locking of the door by means of a key or a card.

In some embodiments, the one or more processors 202 may be configured to receive the sensor readings from the second door sensor 121b after a pre-defined time period from the determination of the occupancy status of the room 120 based on the received sensor readings from the first door sensor 121a. For instance, the first door sensor 121a may detect opening of the door at a first time instance. After the pre-defined time period, say, at a second time instance, the second door sensor 121b may detect locking of the door. As a result, the one or more processors 202 may determine and validate the occupancy status of the room 120 to be occupied. In non-limiting examples, the pre-defined time period may be 1 minute, 2 minutes, 5 minutes, 10 minutes, and so on.

In some embodiments, the one or more processors 202 may be configured to receive sensor readings from the second door sensor 121b associated with the room 120 and determine absence of the closing and/or locking operation of the door. This may indicate that the door has not been locked or closed from the inside of the room 120. In response to determining absence of the closing and/or locking operation of the door, the one or more processors 202 may be configured to trigger a supplemental occupancy detection process based on the plurality of sensors 122a-122n.

In some embodiments, the occupancy status of the room 120 may be indicative of one of a positive status or a negative status. The positive status may indicate occupancy of the room 120 while the negative status may indicate non-occupancy of the room 120.

In the supplemental occupancy detection process, the one or more processors 202 may be configured to receive sensor readings from the plurality of sensors 122a-122n associated with the room 120. The sensor readings may be indicative of the corresponding occupancy parameters associated with the room 120. In some embodiments, the one or more processors 202 may be configured to receive sensor readings from at least two sensors of the plurality of sensors 122a-122n. In some embodiments, the one or more processors 202 may be configured to receive sensor readings from a combination of sensors of the plurality of sensors 122a-122n. For instance, the one or more processors 202 may be configured to receive sensor readings from a combination of IAQ sensor and PIR sensor, a combination of IAQ sensor and noise sensor, a combination of IAQ sensor, PIR sensor, and noise sensor, a combination of IAQ sensor, PIR sensor and proximity sensor, a combination of IAQ sensor, noise sensor and proximity sensor, and the like.

In some embodiments, the sensor readings from each of the plurality of sensors 122a-122n may include sequence of measurements of the corresponding occupancy parameters, the sequence of measurements being sensed over a predetermined time duration. The sequence of measurements from each of the plurality of sensors 122a-122n may include real-time measurements of the corresponding occupancy parameter and historic measurements of the corresponding occupancy parameters. In some embodiments, the predetermined time duration may include any amount of time duration, such as, but not limited to, 30 minutes, 45 minutes, 1 hour, 2 hours, and so on. In some embodiments, the sequence of measurements may be in the form of a time series data indicative of the measurements of corresponding occupancy parameters over the predetermined time duration.

The one or more processors 202 may be configured to receive the sensor readings from the plurality of sensors 122a-122n and determine, based on the received sensor readings, an occupancy status of the room 120 and/or a confidence value associated with the occupancy status of the room 120. The occupancy status of the room 120 indicates whether the room 120 is occupied (positive status) or unoccupied (negative status).

Upon detecting the occupancy status of the room 120 to be negative status or unoccupied, the one or more processors 202 may wait for further sensor readings from the first door sensor 121a in order to detect whether the door has been operated and the room 120 is occupied.

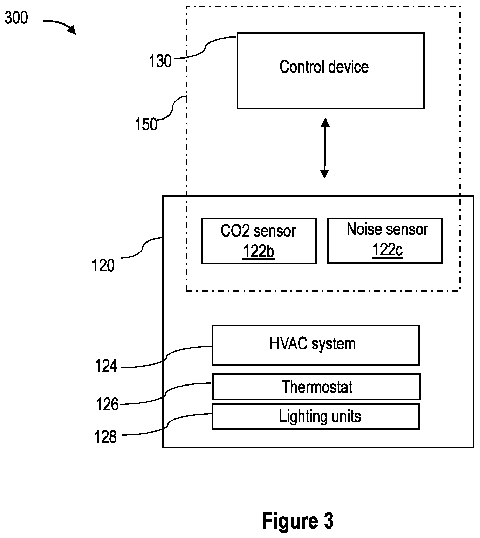

In some embodiments, the plurality of sensors 122a-122n may include a CO2 sensor, say, 122b and a noise sensor, say, 122c. The CO2 sensor 122b and the noise sensor 122c may be disposed within the room 120 and may be in communication with the control device 130. **Figure 3** illustrates another system environment 300 for detecting occupancy of rooms, in accordance with an embodiment of the disclosure. The environment 300 may include the room 120 having the CO2 sensor 122b, the noise sensor 122c, the HVAC system 124, the thermostat 126, and the lighting units 128. The CO2 sensor 122b and the noise sensor 122c may be in communication with the control device 130, together forming the system 150 for detecting occupancy within the room 120. It is appreciated that although a single room 120 is depicted in Figure 3, the detailed provided herein are applicable for each of the plurality of rooms 120a-120n, as shown in Figure 1. Further, the various details provided above with respect to the control device 130, the HVAC system 124, the thermostat 126, and the lighting units 128 in Figures 1-2 are also applicable for Figure 3, and the same have not been repeated for brevity.

The one or more processors 202 (shown in Figure 2) of the control device 130 may be configured to receive sensor readings from the CO2 sensor 122b and the noise sensor 122c. The sensor readings from the CO2 sensor 122b may be indicative of a CO2 level within the room 120. As would be understood to a skilled person, the level of CO2 may vary when the room is occupied as compared to when the room is unoccupied. The sensor readings from the noise sensor 122c may be indicative of various types of sounds within the room 120.

The one or more processors 202 may be configured to determine the occupancy status of the room 120 based on the sensor readings from the CO2 sensor 122b and the noise sensor 122c. In some embodiments, the one or more processors 202 may be configured to determine the occupancy status based on one or more trained mathematical models, as described in detail further below. In some embodiments, the mathematical models may be stored in the model unit 204b of the memory 204.

The occupancy status is indicative of one of a positive status indicating occupancy of the room and a negative status indicating non-occupancy of the room. In some embodiments, to determine the occupancy status, the one or more processors 202 may be configured to process the sensor readings received from the CO2 sensor 122b and the noise sensor 122c.

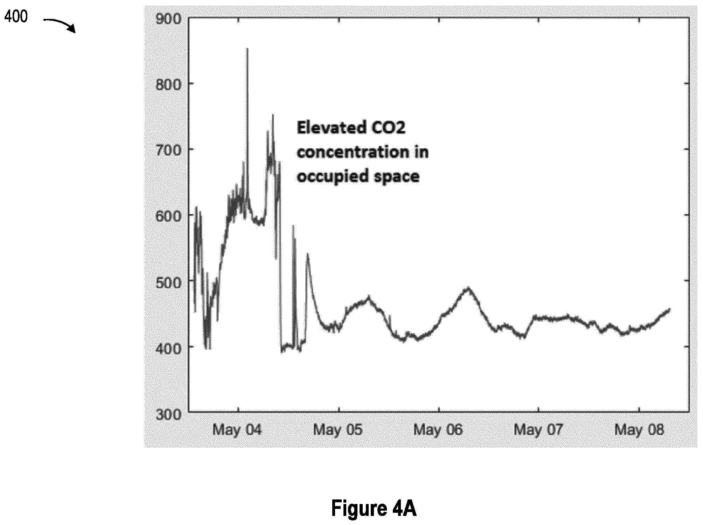

In some embodiments, the sensor readings from the CO2 sensor 122b may include a sequence of measurements over a predetermined time duration. Reference is made to Figure 4A which illustrates an exemplary graphical representation 400 of the sensor readings from the CO2 sensor 122b. As seen in Figure 4A, the CO2 level on a particular point in time, say on May 4, is greater than CO2 level on other points in time, such as on May 6 or May 7, thereby indicating that the room 120 was occupied on May 4 and unoccupied on May 6 or May 7.

In one embodiment, the one or more processors 202 may be configured to determine a rate of change of CO2 level within the room over the predetermined time duration based on the sensor readings. The one or more processors 202 may be configured to compare the rate of change with a first threshold value. The one or more processors 202 may determine that the rate of change is greater than the first threshold value and in response to such determination, may determine the occupancy status to be the positive status. In case the one or more processors 202 determine that the rate of change of CO2 level is lesser than the first threshold value, the occupancy status may be determined as the negative status.

In another embodiment, the one or more processors 202 may be configured to determine the CO2 level within the room based on the sensor readings. The one or more processors 202 may be configured to compare the CO2 level with a second threshold value. The one or more processors 202 may determine that the CO2 level within the room 120 is greater than the first threshold value and in response to such determination, may determine the occupancy status to be the positive status. In case the one or more processors 202 determine that the CO2 level is lesser than the first threshold value, the occupancy status may be determined as the negative status.

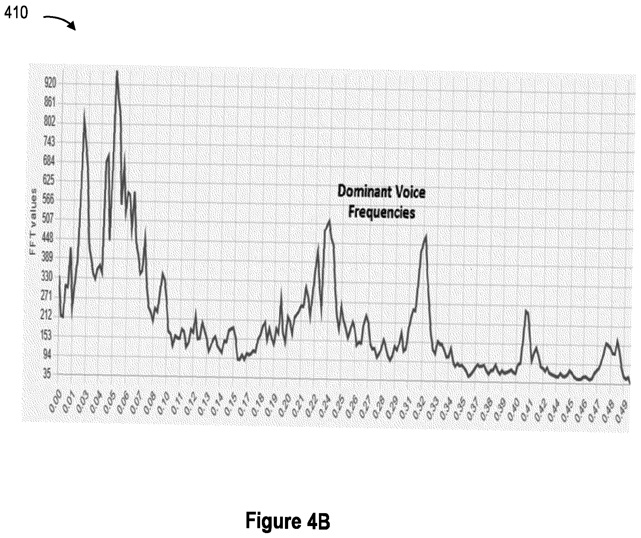

In some embodiments, the sensor readings from the noise sensor 122c may include a sequence of measurements over the predetermined time duration. Reference is made to Figure 4B which illustrates an exemplary graphical representation 410 of the sensor readings from the noise sensor 122c. As seen in Figure 4B, the noise sensor 122c may measure sound frequencies over the predetermined time duration. The one or more processors 202 may be configured to process the sound frequencies via the AI/MI, models and determine whether the detected sound is related to sound from an occupant or sound from other devices within the room 120, such as, a television. In case the one or more processors 202 determine the detected sound to be related to the occupant, the one or more processors 202 may determine the occupancy status to be the positive status. In case the one or more processors 202 determine that the detected sound relates to other devices within the room 120, the occupancy status may be determined as the negative status.

In some embodiments, the one or more processors 202 may determine a confidence value associated with the detected occupancy status. Upon determining the occupancy status of the room 120, the one or more processors may be configured to trigger a control action associated with the room based on the determined occupancy status, as described in detail further below.

In some embodiments, the one or more processors 202 may be configured to detect the occupancy status and/or the confidence value using a plurality of mathematical models. The plurality of mathematical models may include trained neural network (NN) models, machine learning (ML) models, or Artificial Intelligence (AI) models that process the sensor readings to detect the occupancy status and/or the confidence value. In some embodiments, the plurality of mathematical models may include supervised classification networks, such as, but not limited to, pattern recognition network (PRN), long-short term memory (LSTM), and the like.

In some embodiments, the plurality of mathematical models may be stored in a model unit 204b of the memory 204. In some embodiments as described with reference to Figure 3, the mathematical models may be associated with the combination of CO2 and noise sensors. In some embodiments as described with reference to Figure 1, each mathematical model of the plurality of mathematical models may be associated with a corresponding combination of sensors of the plurality of sensors 122a-122n. In particular, each mathematical model may be related to a type of the plurality of sensors 122a-122n and the corresponding occupancy parameters, in that, each mathematical model may be trained to detect occupancy status and confidence value for the related types and combinations of the plurality of sensors 122a-122n and the corresponding occupancy parameters. As an example, a first mathematical model may be related to a combination of IAQ sensor and PIR sensor, the first mathematical model being configured to detect the occupancy status and the confidence value based on sensor readings from the IAQ sensor and the PIR sensor. As another example, a second mathematical model may be related to a combination of IAQ sensor, PIR sensor, noise sensor, and proximity sensor, the second mathematical model being configured to detect the occupancy status and the confidence value based on sensor readings from the IAQ sensor, the PIR sensor, the noise sensor, and the proximity sensor. Accordingly, each of the plurality of mathematical models may be related to particular types and combinations of the plurality of sensors 122a-122n and the corresponding occupancy parameters.

Referring to Figures 1-3, in some embodiments, the one or more processors 202 may be configured to select a mathematical model from the plurality of mathematical models based on the type, or combination, of the plurality of sensors 122a-122n sending the sensor readings for the corresponding occupancy parameters. The one or more processors 202 may be configured to determine the occupancy status of the room 120 and the confidence value based on the selected mathematical model. In some embodiments, the selected mathematical model may be an optimal mathematical model to detect the occupancy status of the room 120, the optimal mathematical model being predetermined during training of the plurality of mathematical models. Accordingly, a related mathematical model (for instance, optimal mathematical model) may be used to accurately determine the occupancy status of the room based on the plurality of sensors being used in the room and providing sensor readings for the corresponding occupancy parameters associated with the room. Further, in case there is a failure of a particular sensor within the room, a different mathematical model may be used to accurately determine the occupancy status based on the other working sensors in the room. Furthermore, in case the sequence of measurements being received from combination of sensors associated with the optimal mathematical model comprises missing data, then a different mathematical model may be selected to determine the occupancy status. As an example, the optimal mathematical model may be a first mathematical model associated with a combination of CO2 and noise sensors. However, for the predetermined time duration, sequence of data from the noise sensor may be missing. As a result, a second mathematical model associated with only the CO2 sensor may be selected to detect the occupancy status of the room.

In some embodiments, the one or more processors 202 may be configured to process each of the sensor readings received from the active (working) sensors of the plurality of sensors within the room 120. The one or more processors 202 may be configured to receive from the active sensors, at a time instance when occupancy of the room 120 is to be detected, the sequence of measurements sensed over the predetermined time duration. The sequence of measurements includes real-time sensor readings of the corresponding occupancy parameters at the time instance and historic sensor readings of the corresponding occupancy parameters sensed over the predetermined time duration.

In some embodiments, the one or more processors 202 may be configured to preprocess the received sequence of measurements prior to providing the sequence of measurements as input to the selected mathematical model. In some embodiments, the preprocessing of the received sequence of measurements includes at least one of normalizing, resampling, and filtering of the sequence of measurements. In some embodiments, the one or more processors 202 may be configured to resample each of the received sequence of measurements based on a resolution parameter, i.e., based on a desired resolution, in order to generate a resampled sequence of measurements. In some embodiments, the resampled sequence of measurements may include an evenly spaced sequence of data associated with the received sequence of measurements. In some embodiments, sensor readings from the IAQ sensor and the noise sensor may be resampled based on interpolation techniques. In some embodiments, sensor readings from PIR sensor may be resampled using zero-order hold techniques. In some embodiments, the resolution parameter may be any desired resolution such as, but not limited to, 5 seconds, 30 seconds, 1 minute, and the like.

In some embodiments, the one or more processors 202 may be configured to filter the resampled sequence of measurements in order to generate a filtered sequence of measurements. The filtered sequence of measurements may correspond to the preprocessed sequence of measurements determined by the resampling and filtering of the sequence of measurements. In some embodiments, the one or more processors 202 may be configured to remove noise from the resampled sequence of measurements and/or remove outliers from the resampled sequence of measurements. In some embodiments, the one or more processors 202 may be configured to smoothen the resampled sequence of measurements based on one or more filtering techniques such as, but not limited to, Gaussian filtering, Savitzky-Golay filtering, and the like. In some embodiments, the sequence of measurements may be received at a desired resolution and resampling may not be required. In such embodiments, the one or more processors 202 may be configured to filter the sequence of measurements in order to generate the filtered sequence of measurements, which may correspond to the preprocessed sequence of measurements. In some embodiments, the one or more processors 202 may be configured to normalize each of the received sequence of measurements to generate a normalized sequence of measurements, which may correspond to the preprocessed sequence of measurements.

In some embodiments, the one or more processors 202 may be configured to pass the filtered sequence of data to the selected mathematical model, and the occupancy status and the confidence value is determined based on the selected mathematical model and the filtered sequence of measurements. The one or more processors 202 may be configured to determine, based on the selected mathematical model and the filtered sequence of measurements, a first classification probability value and a second classification probability value associated with the occupancy status of the room 120. In some embodiments, the one or more processors 202 may be configured to determine a sequence of characteristics of the sequence of measurements, such as, a sequence of standard deviations, derivatives, moving average, etc. The determined sequence of characteristics may be provided to the selected mathematical model, and the first classification probability value and the second classification probability value associated with the occupancy status of the room 120 may be determined based on the selected mathematical model and the determined sequence of characteristics. The one or more processors 202 may be configured to compare the first classification probability value and the second classification probability value.

Based on the comparison of the first classification probability value and the second classification probability value, the one or more processors 202 may be configured to determine the occupancy state and the confidence value of the determined occupancy state. In some embodiments, the one or more processors 202 may be configured to determine the occupancy status to be the positive status indicating occupancy of the room 120 in response to the determination that the first classification probability value is greater than the second classification probability value. In some embodiments, the first classification probability value may be the confidence value associated with the determined occupancy state (positive status). In some embodiments, the one or more processors 202 may be configured to determine the occupancy status to be the negative status indicating non-occupancy of the room 120 in response to the determination that the second classification probability value is greater than the first classification probability value. In some embodiments, the second classification probability value may be the confidence value associated with the determined occupancy status (negative status).

In some embodiments, the one or more processors 202 may be configured to store the occupancy state and the confidence value of the determined occupancy state in the memory 204, such as, in the sensor data unit 204a of the memory 204. In some embodiments, the one or more processors 202 may be configured to determine the occupancy state and the confidence value of the determined occupancy state at a predetermined frequency. The predetermined frequency may be any desired frequency, such as, but not limited to, 30 seconds, 1 minute, 2 minutes, and the like. In some embodiments, the one or more processors 202 may be configured to receive a user input indicative of a request to determine the occupancy state, and in response to receiving the user input, the one or more processors 202 may be configured to determine the occupancy state and the confidence value of the determined occupancy state. In some embodiments, the user input may be provided by a staff member via a user device in communication with the control device 130. In some embodiments, the user input may be provided via a web-based application or a mobile application on the user device.

In some embodiments, the one or more processors 202 may be configured to receive sensor readings from different combination of sensors from among the plurality of sensors 122a-122n based on one or more external parameters, such as, certain time of the day. As an example, the one or more processors 202 may be configured to receive sensor readings from a first combination of sensors during morning time, and from a second combination of sensors during night time.

In some embodiments, the one or more processors 202 may be configured to train the plurality of mathematical models based on the type or combination of the plurality of sensors 122a-122n sending the sensor readings for the corresponding occupancy parameters. Each of the plurality of mathematical models may be associated with a combination of the plurality of sensors 122a-122n such that in case of a failure of one or more sensors in the room 120, a relevant mathematical model may be selected based on the active sensors within the room 120 to determine the occupancy status of the room 120. An optimal mathematical network may initially be selected from the plurality of mathematical models, based on the training, to detect the occupancy status of the room 120. In some scenarios, a different mathematical model may be selected from the plurality of mathematical models as the optimal mathematical network, such as, when there is sensor failure and/or missing information associated with one or more sensors. As an example, initially, a mathematical model based on a combination of noise sensor, PIR sensor, and IAQ sensor may be in use as the optimal mathematical model to determine the occupancy status of the room 120. In case the noise sensor fails or in case the noise sensor may provide incomplete readings, the PIR sensor and the IAQ sensor may still provide the respective sensor readings. Another mathematical model, trained to consider sensors readings from a combination of PIR sensor and IAQ sensor, may then be selected as the optimal mathematical model to determine the occupancy status. A reliable system may thus be achieved that determines the occupancy status of the room 120 despite failure of one or more sensors.

In some embodiments, the one or more processors 202 may be configured to train the plurality of mathematical models for corresponding sensor types and combinations. In some embodiments, the plurality of mathematical models may be trained based on supervised learning using historical sensor readings from a laboratory-based setup. In some embodiments, the plurality of mathematical models may be trained based on supervised learning using historical sensor readings and actual occupancy data associated with the room 120 and/or other rooms. Accordingly, the plurality of mathematical models may be trained based on at least one of sensor readings from a laboratory-based setup or sensor readings from one or more rooms. In some embodiments, the plurality of mathematical models may initially be trained based on sensor readings from the laboratory-based setup, and once deployed in a room (such as, room 120), may be further trained based on sensor readings from said room and/or other different rooms.

For each mathematical model, the one or more processors 202 may be configured to acquire historical sensor readings for the corresponding sensor types and combinations. In some embodiments, the historical sensor readings may be retrieved from the sensor data unit 204a of the memory 204. The historical sensor readings may be for a specified period of time. In some embodiments, the historical sensor readings may comprise sequence of measurements for the specified period of time.

In some embodiments, the one or more processors 202 may be configured to acquire actual occupancy data for the specified period of time, the actual occupancy data being indicative of the actual occupancy status of the room 120 at each time instance of the specified period of time. The actual occupancy data may be used to construct the training output of the mathematical model to be trained. In some embodiments, the mathematical model to be trained may have two output labels - label [1,0] indicating that the room is occupied and label [0,1] indicating that the room is unoccupied.

In some embodiments, the one or more processors 202 may be configured to provide the historical sensor readings as training input to the mathematical model to be trained. In some embodiments, the one or more processors 202 may be configured to resample, smoothen, and normalize the historical sensor readings prior to providing the historical sensor readings as training input to the mathematical model under training. In some embodiments, the one or more processors 202 may be configured to transform the historical sensor readings into a set of sequences based on windowing techniques. As an example, a window size in minutes and step size in minutes may be determined. In some embodiments, the window size may have a same value as the predetermined time duration for which the sequence of measurements is to be received when the mathematical model under training is deployed for real-time use. In some embodiments, a resolution of the historical sensor readings to be provided as input to the mathematical model under training may have a same value as the resolution parameter associated with the sequence of measurements to be received when the mathematical model under training is deployed for real-time use.

In some embodiments, the one or more processors 202 may be configured to train the mathematical model based on the training input (historical sensor readings) and the training output (actual occupancy data). Similarly, each of the plurality of mathematical models may be trained based on historical sensor readings from the corresponding type and combination of sensors. A fail-proof set of mathematical models may thus be trained and stored in the model unit 204b of the memory 204 so that, in real-time use, readings from any combination of sensors that are active within the room 120 can be used to determine the occupancy of the room 120.

In some embodiments, based on the training, an optimal mathematical model may be determined by the one or more processors 202 for the room 120, and the optimal mathematical model may be selected by the one or more processors 202 to detect the occupancy status of the room 120. The optimal mathematical model may refer to the mathematical model which provides the most accurate detection of the occupancy status of the room 120 based on the training. In case of failure of one or more sensors from among the combination of sensors associated with the optimal mathematical model, another mathematical model may be selected by the one or more processors 202 to detect the occupancy status of the room 120. In some embodiments, the training of the plurality of mathematical model may include receiving feedback from one or more staff members associated with the room 120, the feedback being related to the occupancy status of the room 120. Based on the feedback, the optimal mathematical model may be updated from among the plurality of mathematical models. For instance, initially a first mathematical model may be selected as the optimal mathematical model for detecting the occupancy status, however, based on the feedback, it may be determined that a second mathematical model provides a better accuracy and hence the second mathematical model may be determined as the optimal mathematical model for detecting the occupancy status of the room 120.

In some embodiments, the one or more processors 202 may be configured to trigger, in response to determining the occupancy status, a control action associated with the room 120 based on the determined occupancy status. In some embodiments, the one or more processors 202 may be configured to control an operation of the HVAC system 124, the thermostat 126, and the lighting units 128 associated with the room 120 based on the determined occupancy status of the room 120. In some embodiments, upon determining that the occupancy status of the room is the negative status, i.e., the room 120 is unoccupied, the one or more processors 202 may be configured to send control signals to the thermostat 126 and/or the HVAC system 124 to adjust the temperature setpoints of the room 120, such as, to set back the temperature setpoints of the room 120. Thus, an efficient temperature setback control is achieved as the temperature may be set back for the room 120 when the room 120 is unoccupied, leading to energy savings for the room 120. In some embodiments, the one or more processors 202 may be configured to send control signals to the lighting units 128, either directly to the lighting units 128 or through a lighting control unit within the room 120, to adjust the operation of the lighting units 128. For instance, the lighting units 128 may be turned off when the room 120 is unoccupied, leading to further energy savings for the room 120. In some embodiments, if the room contains one or more smart plugs or smart appliances (television for example), the smart plugs and/or smart appliances may be turned off by the processors sending control signals thereto in response to the room 120 being determined to be unoccupied.

In some embodiments, the one or more processors 202 may be configured to cause information related to the determined occupancy status and the confidence value to be displayed on a user interface of one or more user devices. In some embodiments, information related to the determined occupancy status and the confidence value may be displayed on a user interface disposed within the room 120, such as, a user interface associated with the thermostat 126. In some embodiments, information related to the determined occupancy status and the confidence value may be displayed on a user interface associated with a handheld device of a user, such as, a handheld device of one or more staff members. Accordingly, staff members may monitor the occupancy status of the room 120, thereby facilitating the staff members to plan housekeeping and maintenance tasks for the room 120.

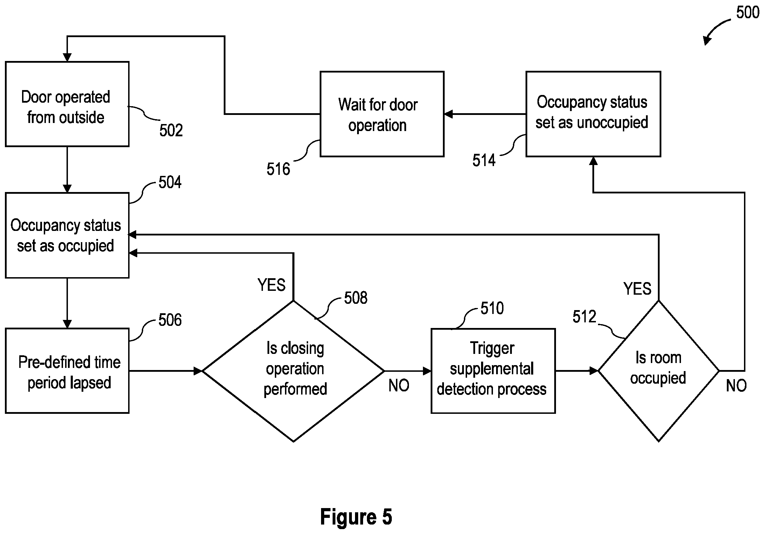

**Figure 5** illustrates an operational process flow 500 for detecting occupancy within the room 120, in accordance with an embodiment of the disclosure. At block 502, the door of the room 120 may be operated by an occupant, for instance, to enter the room 120. The occupant may open the door 120 by means of a key or a smartcard and enter the room 120. The first door sensor 121a may detect the opening operation of the door from the outside of the room 120 and the one or more processors 202 may determine the occupancy status of the room 120 to be occupied (positive status) based on the readings from the first door sensor 121a. At block 504, the occupancy status of the room 120 may be set as occupied (positive status).

At block 506, after detecting the occupancy status of the room 120 to be occupied, a pre-defined time period has lapsed. After the pre-defined time period, at block 508, the occupant may or may not lock the door 120 from the inside of the room 120. The second door sensor 121b may detect whether a closing and/or locking operation of the door from the inside of the room 120 is performed. In particular, the second door sensor 121b may be configured to determine one of: the closing and/or locking operation being performed or an absence of the closing and/or locking operation. The one or more processors 202 may validate the occupancy status of the room 120 to be occupied (positive status) upon determining that the closing and/or locking operation has been performed based on the readings from the second door sensor 121b. The one or more processors 202 may thus validate the occupancy status to be occupied.

At block 510, upon determining absence of the closing and/or locking operation based on the readings from the second door sensor 121b, the one or more processors 202 may be configured to trigger a supplemental detection based on the plurality of sensors 122a-122n. At block 512, as detailed above, the one or more processors 202 may determine whether the room is occupied or unoccupied, in that the one or more processors 202 may determine the occupancy status of the room 120 to be the positive status or the negative status based on the plurality of sensors 122a-122n.

Upon determining the occupancy status of the room 120 to be positive status, the occupancy status of the room 120 may remain as occupied. At block 514, upon determining the occupancy status of the room 120 to be negative status, the occupancy status of the room 120 may be updated as unoccupied. At block 516, the one or more processors 202 may wait for further readings from the first door sensor 121a.

Accordingly, an efficient occupancy detection technique is achieved in which occupancy of the room may initially be detected based on the first door sensor 121a and the second door sensor 121b. The computational processing using the plurality of sensors 122a-122n may thus be avoided in case the occupancy of the room can be determined and validated by the first door sensor 121a and the second door sensor 121b. The computational processing can be used as a supplemental detection technique to determine the occupancy of the room. This saves computational time and costs.

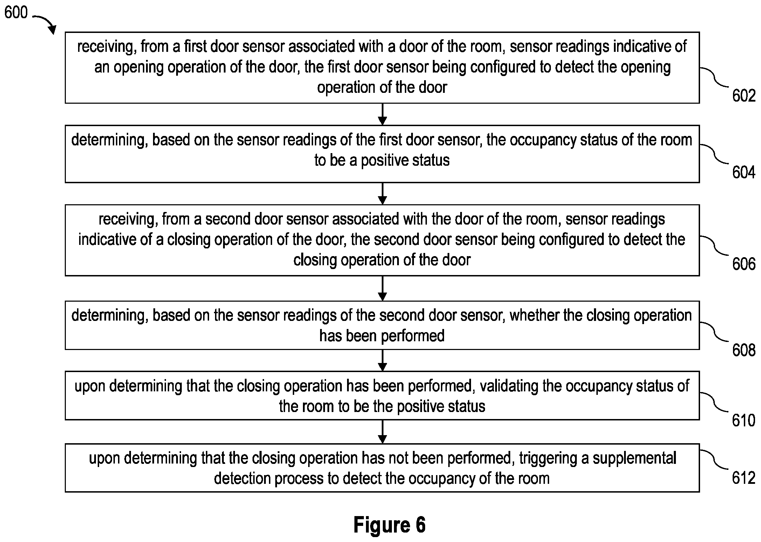

**Figure 6** illustrates a process flow depicting a method 600 for detecting occupancy of rooms. At step 602, the method 600 comprises receiving, from a first door sensor associated with a door of the room, sensor readings indicative of an opening operation of the door, the first door sensor being configured to detect the opening operation of the door. At step 604, the method 600 comprises determining, based on the sensor readings of the first door sensor, the occupancy status of the room to be a positive status.

At step 606, the method 600 comprises receiving, from a second door sensor associated with the door of the room, sensor readings indicative of a closing and/or locking operation of the door, the second door sensor being configured to detect the closing and/or locking operation of the door. At step 608, the method 600 comprises determining, based on the sensor readings of the second door sensor, whether the closing and/or locking operation has been performed.

At step 610, the method 600 comprises, upon determining that the closing and/or locking operation has been performed, validating the occupancy status of the room to be the positive status. At step 612, the method 600 comprises upon determining that the closing and/or locking operation has not been performed, triggering a supplemental detection process to detect the occupancy of the room.

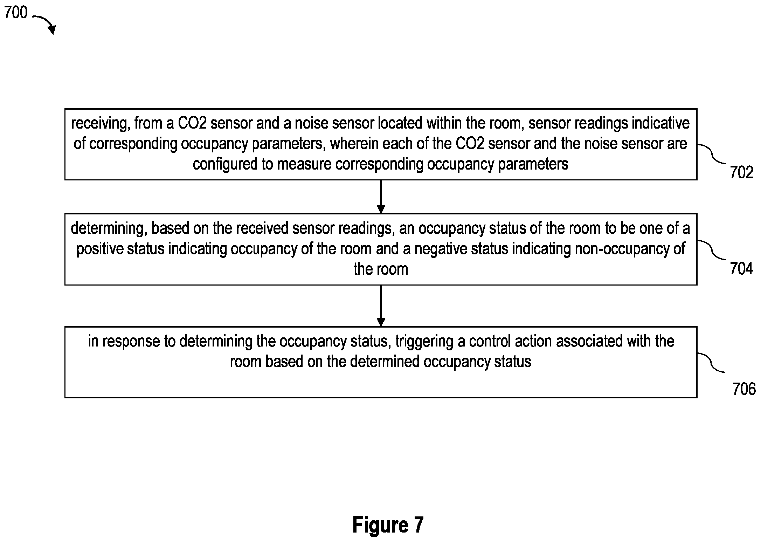

**Figure 7** illustrates a process flow depicting another method 700 for detecting occupancy of rooms. At step 702, the method 700 comprises receiving, from the CO2 sensor 122b and the noise sensor 122c located within the room, sensor readings indicative of corresponding occupancy parameters. Each of the CO2 sensor 122b and the noise sensor 122c are configured to measure corresponding occupancy parameters.

At step 704, the method 700 comprises determining, based on the received sensor readings, an occupancy status of the room to be one of a positive status indicating occupancy of the room and a negative status indicating non-occupancy of the room. At step 706, the method 700 comprises in response to determining the occupancy status, triggering a control action associated with the room based on the determined occupancy status.

While the above steps of Figures 6-7 are shown and described in a particular sequence, the steps may occur in variations to the sequence in accordance with various embodiments of the disclosure. Further, a detailed description related to the various steps of Figures 6-7 is already covered in the description related to Figures 1-5 and is omitted herein for the sake of brevity.

In some embodiments, the one or more processors 202 may be configured to execute instructions included in a computer program product. The computer program product may be embodied on a non-transitory computer readable medium. The computer program product may comprise instructions that, when executed by the one or more processors 202, cause the one or more processors 202 to perform the method steps are detailed with reference to Figures 6-7.

The disclosure provides methods and systems for accurate and high-confidence occupancy detection in rooms. Detection based on environmental sensors like CO2 and noise can improve detection accuracy over a wider area. Combining sensor data further improves the accuracy and performance. Accurate occupancy detection allows for automatic control of appliances within the rooms, leading to energy and cost savings. Further, indications from door sensors can be used to detect and validate occupancy, and computational resources are not required each and every time. This increases response time and reduces computational costs.

As would be apparent to a person in the art, various working modifications may be made to the methods disclosed herein in order to implement the inventive concept as taught herein.

Moreover, the actions of any flow diagram need not be implemented in the order shown; nor do all of the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A system for detecting an occupancy of a room, the system comprising:
a first door sensor and a second door sensor associated with a door of the room, the first door sensor being configured to detect an opening operation of the door and the second door sensor being configured to detect a closing and/or locking operation of the door; and
a control unit communicatively connected with the first door sensor and the second door sensor, the control unit comprising one or more processors configured to:
receive, from the first door sensor, sensor readings indicative of the opening operation of the door;
determine, based on the sensor readings of the first door sensor, the occupancy status of the room to be a positive status;
receive, from the second door sensor, sensor readings indicative of the closing and/or locking operation of the door;
determine, based on the sensor readings of the second door sensor, whether the closing and/or locking operation has been performed;
upon determining that the closing and/or locking operation has been performed, validate the occupancy status of the room to be the positive status; and
upon determining that the closing and/or locking operation has not been performed, trigger a supplemental detection process to detect the occupancy of the room.

2. The system of claim 1, further comprising a plurality of sensors configured to measure corresponding occupancy parameters, wherein to perform the supplemental detection process, the one or more processors are configured to:
receive, from the plurality of sensors, sensor readings indicative of the corresponding occupancy parameters, wherein each of the received sensor readings includes a sequence of measurements, over a predetermined time duration, of the corresponding occupancy parameters; and
determine, based on the received sensor readings, one or more of the occupancy status of the room, and a confidence value associated with the determined occupancy status, wherein the occupancy status is indicative of one of a positive status indicating occupancy of the room and a negative status indicating non-occupancy of the room.

3. The system of claim 2, wherein the one or more processors are further configured to, in response to determining the occupancy status, trigger a control action associated with the room based on the determined occupancy status, the control action modifying an operation of one or more of a heating, ventilation, and air-conditioning (HVAC) system, a thermostat, and lighting units associated with the room.

4. The system of claim 2, wherein to determine one or more of the occupancy status and the confidence value, the one or more processors are configured to:
select a mathematical model from a plurality of mathematical models based on a type of the plurality of sensors and the corresponding occupancy parameters; and
determine the one or more of the occupancy status and the confidence value based on the selected mathematical model.
determine, based on the selected mathematical model and the sequence of measurements, a first classification probability value and a second classification probability value associated with the occupancy status of the room;
compare the first classification probability value and the second classification probability value;
in response to a determination that the first classification probability value is greater than the second classification probability value, determine the occupancy status to be the positive status indicating occupancy of the room; and
in response to a determination that the second classification probability value is greater than the first classification probability value, determine the occupancy status to be the negative status indicating non-occupancy of the room.

5. The system of any of claims 1-4, wherein the one or more processors are configured to cause information related to the occupancy status to be displayed on one or more of a user interface disposed within the room and a user interface associated with a handheld device of a user.

6. The system of any of claims 1-4, wherein the opening operation of the door includes opening of the door from the outside of the room, and wherein the closing and/or locking operation of the door comprises one of closing or locking of the door from the inside of the room.

7. The system of any of claims 1-4, wherein the first sensor is configured to detect an opening operation of door from outside of the room, and the second sensor is configured to detect a closing and/or locking operation of the door from inside of the room.

8. A method for detecting an occupancy of a room, the method comprising:
receiving, from a first door sensor associated with a door of the room, sensor readings indicative of an opening operation of the door, the first door sensor being configured to detect the opening operation of the door;
determining, based on the sensor readings of the first door sensor, the occupancy status of the room to be a positive status;
receiving, from a second door sensor associated with the door of the room, sensor readings indicative of a closing and/or locking operation of the door, the second door sensor being configured to detect the closing and/or locking operation of the door;
determining, based on the sensor readings of the second door sensor, whether the closing and/or locking operation has been performed;
upon determining that the closing and/or locking operation has been performed, validating the occupancy status of the room to be the positive status; and
upon determining that the closing and/or locking operation has not been performed, triggering a supplemental detection process to detect the occupancy of the room.

9. The method of claim 8, wherein triggering the supplemental detection process comprises:
receiving, from a plurality of sensors configured to measure corresponding occupancy parameters, sensor readings indicative of the corresponding occupancy parameters, wherein each of the received sensor readings includes a sequence of measurements, over a predetermined time duration, of the corresponding occupancy parameters; and
determining, based on the received sensor readings, one or more of the occupancy status of the room, and a confidence value associated with the determined occupancy status, wherein the occupancy status is indicative of one of the positive status indicating occupancy of the room and the negative status indicating non-occupancy of the room.

10. The method of claim 9, further comprising, in response to determining the occupancy status, triggering a control action associated with the room based on the determined occupancy status, wherein triggering the control action comprises control an operation of one or more devices associated with the room, wherein the one or more devices comprise a heating, ventilation, and air-conditioning (HVAC) system, a thermostat, and lighting units.

11. The method of claim 9, wherein determining the occupancy status and the confidence value comprises:
selecting a mathematical model from a plurality of mathematical models based on a type of the plurality of sensors and the corresponding occupancy parameters; and
determining the one or more of the occupancy status and the confidence value based on the selected mathematical model.
determining, based on the selected mathematical model and the sequence of measurements, a first classification probability value and a second classification probability value associated with the occupancy status of the room;
comparing the first classification probability value and the second classification probability value;
in response to a determination that the first classification probability value is greater than the second classification probability value, determining the occupancy status to be the positive status indicating occupancy of the room; and
in response to a determination that the second classification probability value is greater than the first classification probability value, determining the occupancy status to be the negative status indicating non-occupancy of the room.

12. The method of any of claims 8-11, further comprising causing information related to the occupancy status to be displayed on one or more of a user interface disposed within the room and a user interface associated with a handheld device of a user.

13. The method of any of claims 8-11, wherein the opening operation of the door includes opening of the door from the outside of the room, and wherein the closing and/or locking operation of the door comprises one of closing or locking of the door from the inside of the room.

14. The method of claim 8, wherein the first sensor is configured to detect an opening operation of door from outside of the room, and the second sensor is configured to detect a closing and/or locking operation of the door from inside of the room.
